# EUROPÄISCHE PATENTSCHRIFT

(11) **EP 4 584 303 B1**
(45) Veröffentlichungstag und Bekanntmachung des Hinweises auf die Patenterteilung: **28.01.2026**
(21) Anmeldenummer: 23764609.6
(22) Anmeldetag: 31.08.2023
(51) Int. Cl.: C08F 6/16, C08F 6/24, C04B 24/26, C08J 3/20, C04B 28/04, C04B 28/06, C04B 40/00, C04B 28/02, C04B 103/00, C04B 111/00

(54) **IN WASSER REDISPERGIERBARE POLYMERPULVER FÜR BAUSTOFFTROCKENFORMULIERUNGEN**
POLYMER POWDERS REDISPERSIBLE IN WATER FOR DRY CONSTRUCTION MATERIAL FORMULATIONS
POUDRES POLYMÈRES REDISPERSIBLES DANS L'EAU POUR FORMULATIONS DE MATÉRIAU DE CONSTRUCTION SEC

(30) Priorität: 06.09.2022 WO PCT/EP2022/074750
(43) Veröffentlichungstag der Anmeldung: 16.07.2025
(73) Patentinhaber: Wacker Chemie AG, 81671 München (DE)
(72) Erfinder: BANNWARTH, Markus, 81671 München (DE); FRITZE, Peter, 81671 München (DE); SORGER, Klas, 81671 München (DE)
(74) Vertreter: Ege, Markus
(86) Internationale Anmeldenummer: PCT/EP2023/073895
(87) Internationale Veröffentlichungsnummer: WO 2024/052202

(56) Entgegenhaltungen:
- WO-A1-2021/239234

## Beschreibung

Die Erfindung betrifft Verfahren zur Herstellung von Polymerisaten in Form von in Wasser redispergierbaren Pulvern unter Zusatz von Alkalisulfaten oder -sulfiten, die so erhältlichen Polymerpulver sowie deren Verwendung beispielsweise in Baustofftrockenformulierungen, wie Fliesenklebern, Dicht-schlämmen, Selbstverlaufsmassen oder Armierungsmassen.

Polymerisate in Form von in Wasser redispergierbaren Pulvern (Polymerpulver) bezeichnen bekanntermaßen Pulverzusammensetzungen, welche durch Trocknen der entsprechenden wässrigen Polymerdispersionen in Gegenwart von Trocknungshilfsmitteln zugänglich sind. Auf Grund dieses Herstellungsprozesses wird das feinteilige Polymerharz der Dispersion mit üblicherweise wasserlöslichen Trocknungshilfsmitteln umhüllt. Bei der Trocknung wirkt das Trocknungshilfsmittel wie ein Mantel, welcher das irreversible Zusammenkleben der Teilchen verhindert. Beim Redispergieren der Polymerpulver in Wasser löst sich das Trocknungshilfsmittel, und es bildet sich eine wässrige Redispersion, in der möglichst wieder die ursprünglichen Polymerteilchen (Primärpolymerpartikel) vorliegen (Schulze J. in TIZ, No. 9, 1985).

Um Polymerpulver mit solchen redispergierbaren Eigenschaften auszustatten, hat es in der Vergangenheit Entwicklungen in die unterschiedlichsten Richtungen gegeben, und es haben sich eine Reihe unterschiedlicher Trocknungshilfsmittel etabliert, insbesondere wasserlösliche organische Polymere. So lehrt beispielsweise die US5567750 Polyvinylalkohole als Trocknungshilfsmittel. Die US5874524 empfiehlt hierfür Polyelektrolyte und die EP0078449 Vinylpyrrolidon-Vinylacetat-Polymere oder (Erd)Alkalisalze von Naphthalinsulfonsäure-Formaldehydkondensaten. Solche Naphthalinsulfonsäure-Formaldehydkondensate sind auch in EP407889 offenbart. Ebenso haben Stärke(derivate) vielfachen Einsatz als Trocknungshilfe gefunden, wie in der EP134451 beschrieben.

Polymerpulver finden vielfach Einsatz als Additiv für Baustofftrockenformulierungen basierend auf hydraulisch abbindenden Bindemitteln, insbesondere Zement, sowie Füllstoffen und Additiven, wie beschrieben in der US2007037925, beispielsweise zur Anwendung als Fliesenkleber, Fugenfüller, Spachtelmassen, Dichtschlämme, Putz oder Estrich. Durch den Zusatz von Polymerpulvern zu den Baustofftrockenformulierungen können beispielsweise die kohäsiven oder adhäsiven Eigenschaften der ausgehärteten Bauprodukte verbessert werden, insbesondere deren mechanische Festigkeiten, wie Haftzugfestigkeiten.

Die Haftzugfestigkeiten von Bauprodukten werden jedoch durch Wärmeeinwirkung beeinträchtigt. Durch Sonneneinstrahlung oder auch Fußbodenheizungen werden die Bauprodukte einer thermischen Belastung ausgesetzt, die zu mechanischen Spannungen im Bauprodukt führt und die Haftzugfestigkeit der Bauprodukte schwächt. Solchen thermischen Belastungen sollen die Bauprodukte über ihren gesamten Lebenszyklus über viele Jahre standhalten. Die Haftzugfestigkeit der Bauprodukte nach Wärmelagerung ist ein wichtiges Maß für deren Resilienz gegenüber thermischen Belastungen. Mit gängigen Polymerpulvern kann zwar schon eine Verbesserung der Haftzugfestigkeiten nach Wärmelagerung erreicht werden, aber auch vor dem Hintergrund des Klimawandels und des Einsatzes der polymermodifizierten Baustoffformulierungen in wärmeren Ländern besteht jedoch Bedarf, die Haftzugfestigkeiten nach Wärmelagerung weiter zu verbessern und dies auf möglichst effiziente Weise zu erreichen, insbesondere auch schon bei Einsatz von geringen Mengen an Polymerpulver.

Vor diesem Hintergrund bestand die Aufgabe, die Haftzugfestigkeiten von Bauprodukten nach Wärmelagerung zu verbessern. Dies sollte vorzugsweise auf möglichst effiziente Weise erreicht werden, insbesondere auch bei Einsatz von geringen Mengen an Polymerpulver.

Überraschenderweise wurde die Aufgabe mit Polymerpulver gelöst, zu dessen Herstellung als Trocknungshilfsmittel ausschließlich oder zu erheblichem Anteil Alkalisulfate oder Alkalisulfite eingesetzt wurden und ≤ 40 Gew.-% an wasserlöslichen organischen Polymeren als Trocknungshilfsmittel zugesetzt wurden, bezogen auf das Gesamtgewicht aus diesen wasserlöslichen organischen Polymeren sowie Schutzkolloiden. Dies war besonders überraschend, da die bisher als Trocknungshilfsmittel etablierten wasserlöslichen organischen Polymere auch Bindemitteleigenschaften mit positivem Einfluss auf die Haftzugfestigkeiten haben, aber erfindungsgemäß zumindest anteilig Alkalisulfate oder -sulfite als Trocknungshilfsmittel eingesetzt wurden, die an sich nicht dafür bekannt sind, die Haftzugfestigkeiten von Bauprodukten nach Wärmelagerung zu verbessern.

Die WO21239234 verbessert die Lagerstabilität von Polymerpulvern durch Zusatz von Alkalisulfaten oder Magnesiumsulfat, setzt aber als Trocknungshilfsmittel die etablierten wasserlöslichen organischen Polymere in den gängigen Mengen ein. Die US2007037925 hat abbindebeschleunigte Mörtel zum Ziel und lehrt hierfür den Zusatz von Polymerpulverzusammensetzungen, die mit (Erd)Alkalisalzen anorganischer oder organischer Säuren modifiziert sind. Als Trocknungshilfsmittel kommen auch hier die gängigen wasserlöslichen organischen Polymere in den üblichen Mengen zum Einsatz. In der WO2017/178422 werden wässrige Polymerdispersionen mit Trocknungshilfsmittel sowie wasserlöslichen Salzen a) von multivalenten Metallen, wie Erdalkalimetallen, Aluminium, Zirkon, Eisen oder Zink, und zusätzlich wasserlöslichen Salzen b) von Anionen wie beispielsweise Aluminaten, Silikaten, Boraten, Sulfaten oder Carbonaten versetzt, wobei die multivalenten Metalle der Salze a) mit den Anionen der Salze b) wasserunlösliche Salze bilden, und anschließend getrocknet, wobei die aus den Salzen a) und b) gebildeten wasserunlöslichen Salze eine Schale auf den Polymerpartikeln ausbilden, die nur in alkalischem Medium oder in Folge mechanischer Beanspruchung aufgelöst wird. Der Anteil der anorganischen Schale beträgt 10 bis 50 Gew.-% oder 10 bis 20 Gew.-%, bezogen auf den Polymer-Kern. Die Schale aus den wasserunlöslichen Salzen wirkt dem Verbacken der Polymerpartikel entgegen und wirkt wie ein Antiblockmittel.

Die Polymerisation von ethylenisch ungesättigten Monomeren wird üblicherweise mittels Initiatoren, beispielsweise Alkalipersulfaten, initiiert. Dabei Zerfallen die Initiatoren bekanntermaßen in Radikale, die sich an ethylenisch ungesättigte Monomere addieren und dadurch das Polymerkettenwachstum initiieren. Infolgedessen sind die Initiatoren über kovalente Bindungen an die im Zuge der Polymerisation gebildeten Polymere angebunden und liegen somit in der Polymerdispersion nicht oder in nicht nennenswerter Menge als anorganische niedermolekulare Verbindungen, wie Alkalisulfate, vor.

Gegenstand der Erfindung sind Verfahren zur Herstellung von Schutzkolloid-stabilisierten Polymerisaten auf Basis ethylenisch ungesättigter Monomere in Form von in Wasser redispergierbaren Pulvern (Polymerpulver),
indem wässrige Dispersionen von Schutzkolloid-stabilisierten Polymerisaten auf Basis ethylenisch ungesättigter Monomere (Polymerdispersionen) in Gegenwart von einem oder mehreren Trocknungshilfsmitteln getrocknet werden, dadurch gekennzeichnet, dass
die Trocknungshilfsmittel a) ein oder mehrere anorganische Salze ausgewählt aus der Gruppe der Alkalisulfate und Alkalisulfite und b) gegebenenfalls ein oder mehrere wasserlösliche organische Polymere umfassen und
die anorganischen Salze a) in den Polymerdispersionen nach Zugabe sämtlicher Trocknungshilfsmittel in gelöster Form vorliegen,
wobei als Trocknungshilfsmittel zu ≥ 25 Gew.-%, bezogen auf das Gesamtgewicht der Trocknungshilfsmittel, die anorganischen Salze a) eingesetzt werden, und
wobei der Anteil von etwaigen, als Trocknungshilfsmittel eingesetzten wasserlöslichen organischen Polymeren b) ≤ 40 Gew.-% beträgt, bezogen auf das Gesamtgewicht aus Schutzkolloiden und etwaigen als Trocknungshilfsmittel eingesetzten wasserlöslichen organischen Polymeren b).

Ein weiterer Gegenstand der Erfindung sind Schutzkolloid-stabilisierte Polymerisate auf Basis ethylenisch ungesättigter Monomere in Form von in Wasser redispergierbaren Pulvern (Polymerpulver) erhältlich nach dem vorgenannten erfindungsgemäßen Verfahren.

Die als Trocknungshilfsmittel eingesetzten anorganischen Salze a) werden vorzugsweise ausgewählt aus der Gruppe umfassend Lithiumsulfat (Li₂SO₄), Natriumsulfat (Na₂SO₄), Kaliumsulfat (K₂SO₄), Lithiumsulfit (Li₂SO₃), Natriumsulfit (Na₂SO₃) und Kaliumsulfit (K₂SO₃). Besonders bevorzugt sind Natriumsulfat, Natriumsulfit, Kaliumsulfat und Kaliumsulfit. Am meisten bevorzugt sind Natriumsulfat und Natriumsulfit. Hierbei sind Sulfate mehr bevorzugt.

Die anorganischen Salze a) liegen in den Polymerdispersionen nach Zugabe sämtlicher Trocknungshilfsmittel in gelöster Form vor. Die anorganischen Salze a) liegen in den Polymerdispersionen vorzugsweise nach Zugabe der insgesamten Menge sämtlicher Trocknungshilfsmittel in gelöster Form vor. Allgemein liegen die anorganischen Salze a) in den Polymerdispersionen vor der Trocknung und/oder bei Beginn der Trocknung in gelöster Form vor. Dies schließt jedoch nicht aus, dass Anteile der anorganischen Salze a) in den Polymerdispersionen in nicht gelöster Form vorliegen, beispielsweise an einem Bestandteil der Polymerdispersionen anhaften. Vorzugsweise liegt zumindest der überwiegende Teil der anorganischen Salze a) in den Polymerdispersionen in gelöster Form vor. Mehr bevorzugt liegen > 50 Gew.-%, noch mehr bevorzugt ≥ 70 Gew.-%, besonders bevorzugt ≥ 90 Gew.-% und am meisten bevorzugt ≥ 99 Gew.-% der anorganischen Salze a) in den Polymerdispersionen in gelöster Form vor, bezogen auf das Gesamtgewicht der als Trocknungshilfsmittel in die Polymerdispersionen eingebrachten anorganischen Salze a). Am allermeisten bevorzugt liegen die als Trocknungshilfsmittel eingebrachten anorganischen Salze a) in den Polymerdispersionen vollständig in gelöster Form vor. All dies gilt allgemein auch für den Fall, dass neben den anorganischen Salzen a) weitere organische oder insbesondere anorganische Salze in die Polymerdispersionen eingebracht werden oder in den Polymerdispersionen vorliegen. Bei Einbringen mehrerer anorganischer Salze a) in die Polymerdispersionen bilden sich aus diesen Salzen generell keine unlöslichen Salze.

Ein Maß und eine erfindungsgemäße Methode zur Bestimmung der Löslichkeit der anorganischen Salze a) in den Polymerdispersionen ist deren Löslichkeit in Wasser. Die anorganischen Salze a) oder, im Falle des Einsatzes weiterer organischer oder insbesondere anorganischer Salze, deren Gemische mit den anorganischen Salzen a) weisen eine Wasserlöslichkeit auf von vorzugsweise ≥ 1 g pro Liter Wasser, mehr bevorzugt ≥ 3 g pro Liter Wasser, noch mehr bevorzugt ≥ 10 g pro Liter Wasser, besonders bevorzugt ≥ 50 g pro Liter Wasser und am meisten bevorzugt ≥ 100 g pro Liter Wasser, je unter Normalbedingungen (23°C/50% relative Luftfeuchtigkeit) nach DIN50014. Diese Angaben beziehen sich vorzugsweise auf neutrale pH-Werte, also pH 7.

Bevorzugt enthalten die Polymerdispersionen und/oder die Polymerpulver 0,1 bis 20 Gew.-%, mehr bevorzugt 0,2 bis 10 Gew.-%, noch mehr bevorzugt 0,3 bis 5 Gew.-%, noch mehr bevorzugt 0,4 bis 4 Gew.-%, besonders bevorzugt 0,5 bis 3 Gew.-%, am meisten bevorzugt 1 bis 2 Gew.-% und am allermeisten bevorzugt 1,1 bis 2 Gew.-% an anorganischen Salzen a), bezogen auf das Gesamtgewicht der Polymerisate auf Basis ethylenisch ungesättigter Monomere.

Der Anteil der anorganischen Salze a), bezogen auf das Gesamtgewicht der Schutzkolloide, beträgt vorzugsweise 2 bis 50 Gew.-%, besonders bevorzugt 3 bis 30 Gew.-% und am meisten bevorzugt 5 bis 20 Gew.-%.

Der Anteil der anorganischen Salze a), bezogen auf das Gesamtgewicht der Schutzkolloide und der wasserlöslichen organischen Polymere b), beträgt vorzugsweise 2 bis 50 Gew.-%, besonders bevorzugt 3 bis 30 Gew.-% und am meisten bevorzugt 5 bis 20 Gew.-%.

Der Anteil der anorganischen Salze a), bezogen auf das Gesamtgewicht der Trocknungshilfsmittel, beträgt vorzugsweise > 25 Gew.-%, mehr bevorzugt ≥ 30 Gew.-%, noch mehr bevorzugt ≥ 40 Gew.-%, noch mehr bevorzugt ≥ 50 Gew.-%, noch mehr bevorzugt ≥ 60 Gew.-% und besonders bevorzugt ≥ 80 Gew.-%.

Am meisten bevorzugt werden als Trocknungshilfsmittel ausschließlich anorganische Salze a) eingesetzt.

Für den Fall, dass die Polymerdispersionen Salze, insbesondere Kationen, enthalten, die mit den Anionen der anorganischen Salze a), insbesondere Sulfat, in Wasser unlösliche Salze bilden, beziehen sich die obigen Gew.-%-Angaben bezüglich der erfindungsgemäßen Mengen an anorganischen Salzen a) vorzugsweise auf die Anteile der anorganischen Salze a), die in den Polymerdispersionen in gelöster Form vorliegen. Dies gilt besonders bevorzugt für den Fall, dass die Polymerdispersionen Erdalkalimetall-, Aluminium-, Zircon-, Eisen- oder ZincKationen enthalten.

Die als Trocknungshilfsmittel eingesetzten wasserlöslichen organischen Polymere b) haben eine Wasserlöslichkeit von vorzugsweise ≥ 1 g pro Liter Wasser, besonders bevorzugt ≥ 3 g pro Liter Wasser und am meisten bevorzugt ≥ 10 g pro Liter Wasser, je unter Normalbedingungen (23°C/50% relative Luftfeuchtigkeit) nach DIN50014. Diese Angaben beziehen sich vorzugsweise auf neutrale pH-Werte, also pH 7.

Beispiele für als Trocknungshilfsmittel geeignete wasserlösliche organische Polymere b) sind Polyvinylalkohole, Polyvinylacetale, nicht-ionische Polyvinylpyrrolidone, nicht-ionische Poly(meth)acrylamide, Polysaccharide und Proteine. Die genannten wasserlöslichen organischen Polymere b) sind mittels des Fachmanns bekannter Verfahren zugänglich. Bevorzugt sind hierbei nicht-ionische wasserlösliche organische Polymere b). Die nicht-ionischen wasserlöslichen organischen Polymere b), insbesondere die nicht-ionischen Polyvinylpyrrolidone und die nicht-ionischen Poly(meth)acrylamide enthalten allgemein keine ionischen Monomer-Einheiten und tragen allgemein keine ionischen Gruppen, insbesondere keine Ammonium-, Carbonsäure-, Sulfonsäure-Gruppen. Die nicht-ionischen Polyvinylpyrrolidone bestehen vorzugsweise aus Vinylpyrrolidon-Einheiten. Die nicht-ionischen Poly(meth)acrylamide bestehen vorzugsweise aus (Meth)Acrylamid-Einheiten.

Mehr bevorzugt sind Polyvinylalkohole; Polyvinylacetale; Polysaccharide, insbesondere in wasserlöslicher Form wie Stärken (Amylose und Amylopectin), Cellulosen oder deren Derivate, wie Carboxymethyl-, Methyl-, Hydroxyethyl-, Hydroxypropyl-Derivate; und Proteine wie Casein oder Caseinat, Sojaprotein und Gelatine. Besonders bevorzugt sind Polyvinylalkohole. Am meisten bevorzugt wird neben Polyvinylalkoholen kein weiteres wasserlösliches organisches Polymer b) als Trocknungshilfsmittel eingesetzt.

Bevorzugte Polyvinylalkohole sind teilverseifte oder vollverseifte Polyvinylalkohole mit einem Hydrolysegrad von vorzugsweise 80 bis 100 Mol-%. Besonders bevorzugt sind teilverseifte Polyvinylalkohole mit einem Hydrolysegrad von 80 bis 95 Mol-%, insbesondere mit einer Höpplerviskosität, in 4 %-iger wässriger Lösung von 1 bis 30 mPas (Methode nach Höppler bei 20°C, DIN 53015). Am meisten bevorzugt werden Polyvinylalkohole mit einem Hydrolysegrad von 85 bis 94 Mol-%, insbesondere mit einer Höpplerviskosität, in 4 %-iger wässriger Lösung von 3 bis 15 mPas (Methode nach Höppler bei 20°C, DIN 53015).

Bevorzugt enthalten die Polymerdispersionen und/oder die Polymerpulver ≤ 15 Gew.-%, mehr bevorzugt ≤ 10 Gew.-%, noch mehr bevorzugt ≤ 5 Gew.-%, noch mehr bevorzugt ≤ 3 Gew.-%, besonders bevorzugt ≤ 0,9 Gew.-% und ganz besonders bevorzugt ≤ 0,5 Gew.-% an wasserlöslichen organischen Polymeren b) als Trocknungshilfsmittel, bezogen auf das Gesamtgewicht der Polymerisate auf Basis ethylenisch ungesättigter Monomere.

Bevorzugt enthalten die Polymerdispersionen und/oder die Polymerpulver < 40 Gew.-%, mehr bevorzugt ≤ 30 Gew.-%, noch mehr bevorzugt ≤ 20 Gew.-%, noch mehr bevorzugt ≤ 10 Gew.-%, besonders bevorzugt ≤ 5 Gew.-% und am meisten bevorzugt ≤ 1 Gew.-% an wasserlöslichen organischen Polymeren b) als Trocknungshilfsmittel, bezogen auf das Gesamtgewicht der Schutzkolloide.

Bevorzugt enthalten die Polymerdispersionen und/oder die Polymerpulver < 40 Gew.-%, mehr bevorzugt ≤ 30 Gew.-%, noch mehr bevorzugt ≤ 20 Gew.-%, noch mehr bevorzugt ≤ 10 Gew.-%, besonders bevorzugt ≤ 5 Gew.-% und am meisten bevorzugt ≤ 1 Gew.-% an wasserlöslichen organischen Polymeren b) als Trocknungshilfsmittel, bezogen auf das Gesamtgewicht aus Schutzkolloiden und etwaigen wasserlöslichen organischen Polymeren b).

Der Anteil der wasserlöslichen organischen Polymere b) als Trocknungshilfsmittel beträgt vorzugsweise ≤ 70 Gew.-%, mehr bevorzugt ≤ 50 Gew.-%, noch mehr bevorzugt ≤ 30 Gew.-%, besonders bevorzugt ≤ 10 Gew.-%, ganz besonders bevorzugt ≤ 5 Gew.-%, bezogen auf das Gesamtgewicht der Trocknungshilfsmittel.

Am allermeisten bevorzugt werden als Trocknungshilfsmittel keine wasserlöslichen organischen Polymere b) eingesetzt.

Etwaige als Trocknungshilfsmittel eingesetzte wasserlösliche organische Polymere b) werden allgemein den Polymerdispersionen zugesetzt, das heißt generell nach ihrer Herstellung mittels Polymerisation. Als Trocknungshilfsmittel eingesetzte wasserlösliche organische Polymere b) werden also generell nach Polymerisationsende eingesetzt. Das Polymerisationsende macht sich bekanntermaßen beispielsweise bemerkbar an der nachlassenden Wärmetönung des Polymerisationsansatzes. Nach Polymerisationsende wird durch den Polymerisationsansatz generell keine Wärme mehr freigesetzt. Deswegen werden den Polymerdispersionen nach ihrer Herstellung mittels Polymerisation generell auch keine ethylenisch ungesättigten Monomere, Schutzkolloide oder Initiatoren zugesetzt. Die Zugabe der als Trocknungshilfsmittel eingesetzten wasserlöslichen organischen Polymere b) erfolgt also insbesondere nach dem Entgasen oder Entspannen des Polymerisationsansatzes, oder nach der Nachpolymerisation, oder nach der Entfernung der Restmonomere oder auch vorzugsweise nach der Konfektionierung der Polymerdispersionen, das heißt nach Zugabe von Additiven, wie Konservierungsmittel oder Entschäumer.

Dagegen sind Schutzkolloide bekanntermaßen generell während der Polymerisation zugegen. Die Zugabe der Schutzkolloide erfolgt also allgemein vor oder während der Polymerisation, oder vor oder während Zugabe der Monomere oder Initiatoren, insbesondere vor vollständiger Zugabe der Monomere oder Initiatoren. Die Zugabe der Schutzkolloide erfolgt also generell auch vor Entfernung von Restmonomeren, oder vor der Nachpolymerisation, also generell vor Polymerisationsende.

Diese Verfahrensschritte schlagen sich zwangsläufig in den strukturellen Eigenschaften der Polymerpulver nieder. So sind beispielsweise Schutzkolloide und als Trocknungshilfsmittel eingesetzte wasserlösliche organische Polymere b) generell bekanntermaßen in vollkommen unterschiedlicher Weise in die Polymerpulver eingebaut und erfüllen vollkommen unterschiedliche Funktionen und Unterschiede hinsichtlich Art oder Zugabeweise von Schutzkolloiden beziehungsweise Trocknungshilfsmitteln begründen damit Verfahrensunterschiede wie auch stoffliche Unterschiede der Polymerpulver.

So stabilisieren Schutzkolloide generell den Polymerisationsansatz während der Polymerisation in wässrigem Medium wie auch die im Zuge der Polymerisation entstehenden Polymerpartikel. Die im Zuge der Polymerisation entstandenen Polymerpartikel werden auch als Primärpartikel bezeichnet. Schutzkolloide werden generell in die Primärpartikel eingebaut oder physikalisch oder chemisch, vorzugsweise irrevesibel, beispielsweise durch physikalische Verschlaufung oder durch kovalente Bindung, in den Primärpartikeln gebunden oder von den im Zuge der Polymerisation entstehenden Polymeren eingekapselt.

Dagegen werden als Trocknungshilfsmittel eingesetzte wasserlösliche organische Polymere b) generell nicht in die Primärpartikel eingebaut. Die als Trocknungshilfsmittel eingesetzten wasserlöslichen organischen Polymere b) umhüllen in Folge ihrer Zugabe nach der Polymerisation generell die Primärpartikel. Die im Zuge der Trocknung entstehenden pulverförmigen Partikel werden auch als Sekundärpartikel bezeichnet. Nach Trocknung der wässrigen Polymerdispersionen sind die Polymerisat-Primärpartikel allgemein von einer Trocknungshilfsmittel-Hülle umhüllt; dadurch sind die Primärpartikel generell voneinander isoliert; dies hat den vorteilhaften Effekt, dass die einzelnen Primärpartikel nicht irreversibel agglomerieren. Nach Redispergieren der Polymerpulver in Wasser werden Primärpartikel generell wieder freigesetzt. Trocknungshilfsmittel befinden sich im Allgemeinen auch an der Grenzfläche der Partikel zur Luft, Schutzkolloide dagegen im Allgemeinen nicht.

Auf Grund der Zugabe der als Trocknungshilfsmittel eingesetzten wasserlöslichen organischen Polymere b) generell nach der Polymerisation sind diese wasserlöslichen organischen Polymere b) allgemein auch nicht durch eine radikalische initiierte Polymerisation modifiziert, wie beispielweise durch Pfropfungsreaktionen oder Oxidations- oder Reduktionsreaktionen durch Initiatoren, wie Redoxinitiatoren, oder Verseifung, wie Verseifung von Acetat-Einheiten von teilweise verseiften Polyvinylalkoholen. Durch Pfropfungsreaktionen werden bekanntermaßen chemische Gruppen, wie Monomere, an Polymere angebunden, allgemein über kovalente Bindungen. Pfropfungsreaktionen treten in besonderem Maße beim Polymerisieren von Vinylacetat und/ oder Ethylen auf. Dagegen können Schutzkolloide in Folge ihrer Gegenwart während der Polymerisation generell solche Modifizierungen erfahren.

Auch Hilfsmittel oder Additive für die Polymerisation, wie Initiatoren, werden im Zuge der Polymerisation allgemein entweder über kovalente Bindungen direkt an die Polymerketten angebunden oder in die Polymerpartikel eingebaut oder von den Polymeren eingekapselt.

Die Polymerisate von ethylenisch ungesättigten Monomeren (Basispolymere) basieren beispielsweise auf einem oder mehreren Monomeren ausgewählt aus der Gruppe umfassend Vinylester, (Meth)acrylsäureester, Vinylaromaten, Olefine, 1,3-Diene und Vinylhalogenide.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9R oder VeoVa10R (Handelsnamen der Firma Resolution). Besonders bevorzugt ist Vinylacetat.

Geeignete Monomere aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen und Propylen, und die bevorzugten Diene sind 1,3-Butadien und Isopren.

Gegebenenfalls können noch 0 bis 10 Gew.-%, vorzugsweise 0,1 bis 5 Gew.-%, bezogen auf das Gesamtgewicht der Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und - nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

In einer alternativen, bevorzugten Ausführungsform sind keine ethylenisch ungesättigte Mono- und Dicarbonsäuren, keine Mono- und Diester der Fumarsäure und Maleinsäure, kein Maleinsäureanhydrid und/oder keine ethylenisch ungesättigte Sulfonsäuren in die Copolymere einpolymerisiert. Besonders bevorzugt sind keine Hilfsmonomere in die Copolymere einpolymerisiert.

Styrol-(Meth)Acrylsäureester-Copolymeren und insbesondere Vinylacetat-Ethylen-Copolymere sind bevorzugt.

Die Polymerpulver enthalten vorzugsweise 50 bis 90 Gew.-% an Vinylacetat-Ethylen- und/oder Styrol-(Meth)Acrylsäureester-Copolymeren, bezogen auf das Gesamtgewicht der Polymerpulver.

Bevorzugt werden Mischpolymerisate von Vinylacetat mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von Vinylacetat, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit Vinylacetat, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Die Monomerauswahl bzw. die Auswahl der Gewichtsanteile der Comonomere erfolgt dabei so, dass eine Glasübergangstemperatur Tg von vorzugsweise -50°C bis +35°C, besonders bevorzugt -30°C bis +25°C und am meisten bevorzugt -10°C bis +20°C resultiert. Die Glasübergangstemperatur Tg der Polymerisate kann in bekannter Weise mittels Differential Scanning Calorimetry (DSC) ermitelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Polymere sind vorzugsweise mittels Emulsionspolymerisation oder Suspensionspolymerisation von einem oder mehreren ethylenisch ungesättigten Monomeren in wässrigem Medium erhältlich. Vorzugsweise erfolgt die Herstellung der Polymerisate nach dem Emulsionspolymerisationsverfahren.

Die Polymerisationstemperatur ist vorzugsweise zwischen 40°C und 110°C, besonders bevorzugt zwischen 60°C und 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0,001 bis 1,0 Gew.-%, vorzugsweise 0,0015 bis 0,7 Gew.-%, besonders bevorzugt 0,002 bis 0,4 Gew.-% und am meisten bevorzugt 0,0025 bis 0,3 Gew.-%, jeweils bezogen auf das Gesamtgewicht der Monomere, eingesetzt.

Als Redox-Initiatoren verwendet man Kombinationen aus den genannten Initiatoren und Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im Allgemeinen 0,001 bis 1,0 Gew.-%, vorzugsweise 0,0015 bis 0,7 Gew.-%, besonders bevorzugt 0,002 bis 0,4 Gew.-% und am meisten bevorzugt 0,0025 bis 0,3 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Als Schutzkolloide für die Polymerisation sind dieselben Polymere geeignet und entsprechend bevorzugt, die weiter oben als wasserlösliche organische Polymere b) beschrieben sind. Bevorzugt sind also Polyvinylalkohole.

Die Schutzkolloide werden in einer Menge von vorzugsweise 1 bis 20 Gew.-%, besonders bevorzugt 2 bis 15 Gew.-% und am meisten bevorzugt 3 bis 10 Gew.-%, bezogen auf das Gesamtgewicht der Monomere, bei der Polymerisation zugesetzt.

Wird in Gegenwart von Emulgatoren polymerisiert, beträgt deren Menge 0,5 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Besonders bevorzugt wird in Abwesenheit von Emulgatoren polymerisiert. Die wässrigen Dispersionen und/oder die Polymerpulver enthalten vorzugsweise keine Emulgatoren.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die so erhältlichen Polymere liegen vorzugsweise in Form von wässrigen Dispersionen, insbesondere Schutzkolloid stabilisierten wässrigen Dispersionen vor.

Der Zusatz der als Trocknungshilfsmittel eingesetzten anorganischen Salze a) kann vor, während oder vorzugsweise nach der Herstellung der Polymerisate mittels Polymerisation erfolgen. Es können auch chemische Substanzen eingesetzt werden, die sich durch chemische Reaktion in erfindungsgemäße anorganische Salze a) umwandeln.

Beispielsweise können die anorganischen Salze a) vor der Initiierung der Polymerisation mit den ethylenisch ungesättigten Monomeren vermischt werden. Alternativ dazu können die anorganischen Salze a) während der Polymerisation der ethylenisch ungesättigten Monomere zugegeben werden. Ebenso kann ein Teil der anorganischen Salze a) den ethylenisch ungesättigten Monomeren vor der Initiierung der Polymerisation beigemischt werden und der restliche Teil der anorganischen Salze a) während der Polymerisation der ethylenisch ungesättigten Monomere zugegeben werden.

Bevorzugt erfolgt die Zugabe der anorganischen Salze a) nach Abschluss der Polymerisation zur entsprechenden Polymerdispersion. Besonders bevorzugt erfolgt die Zugabe der anorganischen Salze a) vor der Trocknung der wässrigen Polymerdispersion. Dazu werden vorzugsweise ein oder mehrere anorganische Salze a) den wässrigen Polymerdispersionen zugegeben, um anschließend die so erhaltenen Mischungen zu trocknen. Während der Trocknung der wässrigen Polymerdispersionen werden vorzugsweise keine anorganischen Salze a) zugegeben.

Etwaige als Trocknungshilfsmittel eingesetzte wasserlösliche organische Polymere b) werden allgemein den Polymerdispersionen zugegeben, beispielweise räumlich oder zeitlich gemeinsam mit den anorganischen Salzen a) oder separat von den anorganischen Salzen a).

Das Trocknen der Polymerdispersionen kann beispielsweise mittels Wirbelschichttrocknung, Gefriertrocknung oder Sprühtrocknung erfolgen. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von bevorzugt < 10.000 mPas, mehr bevorzugt < 5.000 mPas und besonders bevorzugt < 1.000 mPas, erhalten wird (Brookfield-Viskosität bei 20 Umdrehungen und 23°C). Der Feststoffgehalt der zu verdüsenden Dispersion beträgt vorzugsweise 30 bis 75 Gew.-% und besonders bevorzugt 50 bis 60 Gew.-%.

Vielfach hat sich ein Gehalt von bis zu 1,5 Gew.-% Antischaummittel, bezogen auf das Polymerisat, als günstig erwiesen. Antischaummittel wird vorzugsweise bei der Verdüsung zugegeben.

Zur Erhöhung der Lagerfähigkeit durch Verbesserung der Verblockungsstabilität, insbesondere bei Polymerpulvern mit niedriger Glasübergangstemperatur, kann das erhaltene Polymerpulver beispielsweise mit einem oder mehreren Antiblockmitteln (Antibackmittel) ausgerüstet werden. Die Antiblockmittel werden vorzugsweise nicht den wässerigen Polymerdispersionen, also vorzugsweise nicht vor der Trocknung, sondern vorzugsweise während oder nach der Trocknung, insbesondere während der Trocknung in die Sprühtrocknungsanlage zugegeben. Bevorzugte Polymerpulver enthalten Antiblockmittel, insbesondere 1 bis 30 Gew.-%, bezogen auf das Gesamtgewicht polymerer Bestandteile. Beispiele für Antiblockmittel sind Ca- bzw. Mg-Carbonat, Talk, Gips, Kieselsäure, Kaoline wie Metakaolin, Silicate, vorzugsweise mit Teilchengrößen im Bereich von 10 nm bis 10 µm. Antiblockmittel sind üblicherweise wasserunlöslich.

Zur Verbesserung der anwendungstechnischen Eigenschaften können bei der Trocknung weitere Zusätze zugegeben werden. Weitere, in bevorzugten Ausführungsformen enthaltene Bestandteile von Polymerpulver sind beispielsweise Pigmente, Füllstoffe, Schaumstabilisatoren, Hydrophobierungsmittel oder Zementverflüssiger.

Die Polymerpulver enthalten vorzugsweise keinen Polyelektrolyten. Polyelektrolyte bezeichnen allgemein Polymerisate mit in wässrigem Medium ionisch dissoziierbaren Gruppen, die Bestandteil oder Substituent der Polymerisatkette sein können. Die Anzahl der ionisch dissoziierbaren Gruppen ist allgemein so groß, dass die Polymerisate in der dissoziierten Form in Wasser vollständig löslich sind. Bei Polyelektrolyte kann es sich beispielsweise um Polysäuren oder Polybasen handeln.

Die Polymerpulver enthalten vorzugsweise keine wasserlöslichen Halogenidsalze, insbesondere keine wasserlöslichen Chloridsalze. Wasserlösliche Halogenidsalze haben eine Wasserlöslichkeit von vorzugsweise ≥ 1 g pro Liter Wasser, unter Normalbedingungen (23/50) nach DIN50014.

Die Polymerpulver enthalten vorzugsweise keine polyfunktionellen Alkohole, insbesondere keine Alkohole, die mindestens eine Alkohol-Gruppe und gegebenenfalls eine oder mehrere weitere funktionelle Gruppen tragen ausgewählt aus der Gruppe umfassend Amin-, Carbaminsäure-, Mercaptan-, Sulfonsäure-, Schwefelsäure-, Halogenid-, Carboxyl-, Alkoxy-, Phosphinsäure-, Phosphonsäure- und Phosphorsäure-Gruppen, wobei die Summe aus der Anzahl der Alkohol-Gruppen und der weiteren funktionellen Gruppen der Alkohole ≥ 2 ist. Die Polymerpulver enthalten vorzugsweise keine Alkohole mit ≤ 20, besonders bevorzugt ≤ 15 Kohlenstoffatomen oder > 2 Kohlenstoffatomen.

Die Polymerpulver enthalten vorzugsweise kein Polyalkylenpolyamin, insbesondere kein Polyethylenimin, insbesondere nicht mit einem Molekulargewicht von 300 bis 10.000.000. Polyalkylenpolyamin basieren allgemein auf Amin-, Ammonium- oder AmidGruppen tragenden, ethylenisch ungesättigten Monomeren und gegebenenfalls weiteren ethylenisch ungesättigten Monomeren.

Den Polymerdispersionen werden vorzugsweise keine Salze von multivalenten Metallen zugesetzt, insbesondere keine Salze von Magnesium, Calcium, Barium, Aluminium, Zirconium, Eisen oder Zink.

Ein weiterer Gegenstand der Erfindung sind Baustofftrockenformulierungen enthaltend ein oder mehrere hydraulisch abbindende Bindemittel, ein oder mehrere Füllstoffe, ein oder mehrere erfindungsgemäße Polymerpulver und gegebenenfalls ein oder mehrere Zusatzstoffe.

Die Baustofftrockenformulierungen enthalten vorzugsweise 0,1 bis 30 Gew.-%, besonders bevorzugt 0,3 bis 12,0 Gew.-% und am meisten bevorzugt 0,5 bis 5,0 Gew.-% erfindungsgemäße Polymerpulver, jeweils bezogen auf das Gesamtgewicht der Baustofftrockenformulierungen.

Geeignete hydraulisch abbindende Bindemittel sind beispielsweise Zemente, insbesondere Portlandzement, Aluminatzement, Trasszement, Hüttenzement, Magnesiazement, Phosphatzement oder Hochofenzement, sowie Mischzemente, Füllzemente, Flugasche, Microsilica, hydraulischer Kalk und Gips. Bevorzugt werden Portlandzement, Aluminatzement und Hüttenzement, sowie Mischzemente, Füllzemente, hydraulischer Kalk und Gips. Bevorzugt sind auch Gemische von zwei oder mehr hydraulisch abbindenden Bindemitteln, die insbesondere Zement und hydraulischen Kalk enthalten.

Im Allgemeinen enthalten die Baustofftrockenformulierungen 5 bis 50 Gew.-%, vorzugsweise 10 bis 30 Gew.-%, hydraulisch abbindende Bindemittel, jeweils bezogen auf das Gesamtgewicht der Baustofftrockenformulierungen.

Beispiele für geeignete Füllstoffe sind Quarzsand, Quarzmehl, Calciumcarbonat, Dolomit, Aluminiumsilicate, Ton, Kreide, Weißkalkhydrat, Talkum oder Glimmer, oder auch Leichtfüllstoffe wie Bims, Schaumglas, Gasbeton, Perlite, Vermiculite, Carbon-Nano-Tubes (CNT). Es können auch beliebige Gemische der genannten Füllstoffe eingesetzt werden. Bevorzugt werden Quarzsand, Quarzmehl, Calciumcarbonat, Kreide oder Weißkalkhydrat. Füllstoffe sind allgemein beziehungsweise implizit wasserunlöslich.

Im Allgemeinen enthalten die Baustofftrockenformulierungen 30 bis 90 Gew.-%, vorzugsweise 40 bis 85 Gew.-% Füllstoffe, jeweils bezogen auf das Gesamtgewicht der Baustofftrockenformulierungen.

Weitere übliche Zusatzstoffe für die Baustofftrockenformulierungen sind Verdickungsmittel, beispielsweise Polysaccharide wie Celluloseether und modifizierte Celluloseether, Stärkeether, Guar Gum, Xanthan Gum, Schichtsilikate, Polycarbonsäuren wie Polyacrylsäure und deren Teilester, sowie Polyvinylalkohole welche gegebenenfalls acetalisiert oder hydrophob modifiziert sein können, Casein und assoziativ wirkende Verdicker. Übliche Zusatzstoffe sind auch Verzögerer, wie Hydroxycarbonsäuren, oder Dicarbonsäuren oder deren Salze, Saccharide, Oxalsäure, Bernsteinsäure, Weinsäure, Gluconsäure, Zitronensäure, Sucrose, Glucose, Fructose, Sorbit, Pentaerythrit. Ein übliches Additiv sind Abbindebeschleuniger beispielsweise Alkali- oder Erdalkalisalze von anorganischen oder organischen Säuren. Darüber hinaus sind noch zu nennen: Hydrophobierungsmittel, Konservierungsmittel, Filmbildehilfsmittel, Dispergiermittel, Schaumstabilisatoren, Entschäumer und Flammschutzmittel (z.B. Aluminiumhydroxid).

Die Zusatzstoffe werden in den dafür üblichen, von der Art des Zusatzstoffes abhängigen, Mengen eingesetzt. Im Allgemeinen liegen die Mengen bei 0,01 bis 10 Gew.-%, jeweils bezogen auf das Gesamtgewicht der Baustofftrockenformulierungen.

Die Herstellung der Baustofftrockenformulierungen erfolgt im Allgemeinen so, dass ein oder mehrere hydraulisch abbindende Bindemittel, ein oder mehrere Füllstoffe, ein oder mehrere Polymerpulver und gegebenenfalls ein oder mehrere Zusatzstoffe zu einer Trockenmischung vermischt und homogenisiert werden. Das Herstellen der Baustofftrockenformulierungen kann in an sich herkömmlicher Weise in herkömmlichen Vorrichtungen erfolgen. Die zur Verarbeitung der Baustofftrockenformulierungen erforderliche Wassermenge wird üblicherweise unmittelbar vor der Applikation hinzugefügt.

Die Baustofftrockenformulierungen eignen sich beispielsweise zur Herstellung von Armierungsmassen für Wärmedämmverbundsysteme, oder zur Herstellung von Klebemitteln oder Beschichtungsmitteln. Beispiele für Klebemittel sind Klebemittel für Wärmedämmplatten und Schallschutzplatten, Fliesenkleber, und Klebemittel zur Verklebung von Holz und Holzwerkstoffen. Beispiele für Beschichtungsmittel sind Mörtel, Verlaufsmassen, Dichtschlämme, Estriche, Putze.

Durch Zusatz der erfindungsgemäßen Polymerpulver zu Baustofftrockenformulierungen werden überraschenderweise Bauprodukte mit verbesserten Haftzugfestigkeiten nach Wärmelagerung erhalten. Besonders überraschend war hierbei, dass dies durch Einsatz von Alkalisulfaten oder -sulfiten als Trocknungshilfsmittel erreicht wurde, die an sich nicht dafür bekannt sind, die Haftzugfestigkeiten von Bauprodukten nach Wärmelagerung zu verbessern.

Vorteilhafterweise kann die Haftzugfestigkeit nach Wärmelagerung auch schon mit relativ geringen Einsatzmengen an erfindungsgemäßen Polymerpulvern signifikant verbessert werden.

Die nachfolgenden Beispiele dienen zur weiteren Erläuterung der Erfindung.

### Herstellung der Polymerpulver:

Für die Herstellung der Polymerpulver wurde jeweils dieselbe gängige Polymerdispersion eines Vinylacetat-Ethylen-Copolymers mit einer Glasübergangstemperatur Tg von 17°C verwendet. Die Polymerdispersion wurde auf herkömmliche Weise mittels Emulsionspolymerisation hergestellt und enthielt 6 Gew.-% Polyvinylalkohol als Schutzkolloid.

Zu dieser Polymerdispersion wurden die in Tabelle 1 aufgeführten Mengen an Trocknungshilfsmittel gegeben.

Die resultierenden Sprühspeise wurden für alle (Vergleichs)-Beispiele in an sich herkömmlicher Weise mittels Sprühtrocknung getrocknet, wodurch ein redispergierbares Polymerpulver erhalten wurde.

Jedem der so hergestellten Polymerpulver wurden während der Sprühtrocknung 20 Gew.-% Antibackmittel zugegeben.

Die Polymerpulver wurden in zementären Fliesenklebern folgender Rezepturen ausgetestet:
Fliesenkleber 1 mit 3 Gew.-% Polymerpulver:
   420 g Milke CEM I
   460 g Quarzsand Mittlere Korngröße
   81 g Calciumcarbonate
   4 g Tylose
   5 g Beschleuniger
   30 g Polymerpulver des jeweiligen (Vergleichs)Beispiels
   310 g Wasser
Fliesenkleber 2 mit 6 Gew.-% Polymerpulver:
   400 g Milke CEM I
   265,5 g Quarzsand Grob
   265,5 g Quarzsand Fein
   4 g Tylose
   5 g Beschleuniger
   60 g Polymerpulver des jeweiligen (Vergleichs)Beispiels
   270 g Wasser

Die Applikation der Fliesenkleber 1 beziehungsweise Fliesenkleber 2 erfolgte auf herkömmliche Weise. Die Ausprüfung der Haftzugwerte nach Wärmelagerung wurde nach EN1348 durchgeführt.

Die Ergebnisse der Austestung sind in Tabelle 1 zusammengefasst.

**Tabelle 1:**

| | Trocknungshilfsmittel | | Haftzugwert nach Wärmelagerung [N/mm²] | |
|---|---|---|---|---|
| | PVOH (04/88)^{a,b)} | anorganisches Salz^{a)} | Fliesenkleber 1 | Fliesenkleber 2 |
| VBsp. 1 | - | - | 0, 47 | 1,07 |
| Bsp. 2 | - | 1,3 Gew.-% Na₂SO₄ | 1,63 | 2,70 |
| Bsp.3 | - | 1,3 Gew.-% Na₂SO₃ | 1,39 | 2,24 |
| VBsp. 4 | 1 Gew.-% | - | 0,60 | 1,26 |
| Bsp. 5 | 1 Gew.-% | 0,6 Gew.-% Na₂SO₄ | 1,44 | 2,13 |
| Bsp. 6 | 1 Gew.-% | 1,3 Gew.-% Na₂SO₄ | 1,48 | 2,46 |
| Bsp. 7 | 1 Gew.-% | 1,3 Gew.-% Na₂SO₃ | 1,48 | 2,31 |

| | | | | |
|---|---|---|---|---|
| a) Gew.-% bezogen auf den Polymergehalt der Dispersion (festfest); b) PVOH (04/88): Polyvinylalkohol mit einer Höpplerviskosität von 4 mPas und einem Verseifungsgrad von 88%. | | | | |

Die Austestungsergebnisse der Tabelle 1 zeigen, dass die Zugabe von anorganischen Salzen a) als Trocknungshilfsmittel die Haftzugwerte nach Wärmelagerung verbessern.

## Patentansprüche

1. Verfahren zur Herstellung von Schutzkolloid-stabilisierten Polymerisaten auf Basis ethylenisch ungesättigter Monomere in Form von in Wasser redispergierbaren Pulvern,
indem wässrige Dispersionen von Schutzkolloid-stabilisierten Polymerisaten auf Basis ethylenisch ungesättigter Monomere mittels Polymerisation von einem oder mehreren ethylenisch ungesättigten Monomeren in wässrigem Medium hergestellt und in Gegenwart von einem oder mehreren Trocknungshilfsmitteln getrocknet werden, **dadurch gekennzeichnet, dass**
die Trocknungshilfsmittel a) ein oder mehrere anorganische Salze ausgewählt aus der Gruppe der Alkalisulfate und Alkalisulfite und b) gegebenenfalls ein oder mehrere wasserlösliche organische Polymere umfassen und
die anorganischen Salze a) in den wässrigen Dispersionen der Schutzkolloid-stabilisierten Polymerisate auf Basis ethylenisch ungesättigter Monomere nach Zugabe sämtlicher Trocknungshilfsmittel in gelöster Form vorliegen,
wobei als Trocknungshilfsmittel zu ≥ 25 Gew.-%, bezogen auf das Gesamtgewicht der Trocknungshilfsmittel, die anorganischen Salze a) eingesetzt werden, und
wobei der Anteil von etwaigen, als Trocknungshilfsmittel eingesetzten wasserlöslichen organischen Polymeren b) ≤ 40 Gew.-% beträgt, bezogen auf das Gesamtgewicht aus Schutzkolloiden und etwaigen als Trocknungshilfsmittel eingesetzten wasserlöslichen organischen Polymeren b),
mit den Maßgaben, dass die Schutzkolloide vor oder während der Polymerisation zugegeben werden und
etwaige als Trocknungshilfsmittel eingesetzte wasserlösliche organische Polymere b) den wässrigen Dispersionen der Schutzkolloid-stabilisierten Polymerisate nach ihrer Herstellung mittels Polymerisation zugesetzt werden
und
die Schutzkolloide den Polymerisationsansatz während der Polymerisation in wässrigem Medium und auch die im Zuge der Polymerisation entstehenden Polymerpartikel stabilisieren und die Schutzkolloide in die im Zuge der Polymerisation entstehenden Polymerpartikel eingebaut werden und
etwaige als Trocknungshilfsmittel eingesetzte wasserlösliche organische Polymere b) in Folge ihrer Zugabe nach der Polymerisation die im Zuge der Polymerisation entstandenen Polymerpartikel umhüllen.

2. Verfahren zur Herstellung von Schutzkolloid-stabilisierten Polymerisaten auf Basis ethylenisch ungesättigter Monomere in Form von in Wasser redispergierbaren Pulvern nach Anspruch 1, **dadurch gekennzeichnet, dass** 0,1 bis 20 Gew.-% an anorganischen Salzen a) eingesetzt werden, bezogen auf das Gesamtgewicht der Polymerisate auf Basis ethylenisch ungesättigter Monomere.

3. Verfahren zur Herstellung von Schutzkolloid-stabilisierten Polymerisaten auf Basis ethylenisch ungesättigter Monomere in Form von in Wasser redispergierbaren Pulvern nach Anspruch 1 oder 2, **dadurch gekennzeichnet, dass** 2 bis 50 Gew.-% an anorganischen Salze a) eingesetzt werden, bezogen auf das Gesamtgewicht der Schutzkolloide.

4. Verfahren zur Herstellung von Schutzkolloid-stabilisierten Polymerisaten auf Basis ethylenisch ungesättigter Monomere in Form von in Wasser redispergierbaren Pulvern nach Anspruch 1 bis 3, **dadurch gekennzeichnet, dass** 2 bis 50 Gew.-% an anorganischen Salzen a) eingesetzt werden, bezogen auf das Gesamtgewicht der Schutzkolloide und der wasserlöslichen organischen Polymere b).

5. Verfahren zur Herstellung von Schutzkolloid-stabilisierten Polymerisaten auf Basis ethylenisch ungesättigter Monomere in Form von in Wasser redispergierbaren Pulvern nach Anspruch 1 bis 4, **dadurch gekennzeichnet, dass** als anorganische Salze a) Natriumsulfat, Natriumsulfit, Kaliumsulfat und/oder Kaliumsulfit eingesetzt werden.

6. Verfahren zur Herstellung von Schutzkolloid-stabilisierten Polymerisaten auf Basis ethylenisch ungesättigter Monomere in Form von in Wasser redispergierbaren Pulvern nach Anspruch 1 bis 5, **dadurch gekennzeichnet, dass** ein oder mehrere wasserlösliche organische Polymere b) ausgewählt werden aus der Gruppe umfassend Polyvinylalkohole, Polyvinylacetale, nicht-ionische Polyvinylpyrrolidone, nicht-ionische Poly(meth)acrylamide, Polysaccharide und Proteine.

7. Verfahren zur Herstellung von Schutzkolloid-stabilisierten Polymerisaten auf Basis ethylenisch ungesättigter Monomere in Form von in Wasser redispergierbaren Pulvern nach Anspruch 1 bis 6, **dadurch gekennzeichnet, dass** als Trocknungshilfsmittel ausschließlich anorganische Salze a) eingesetzt werden.

8. Verfahren zur Herstellung von Schutzkolloid-stabilisierten Polymerisaten auf Basis ethylenisch ungesättigter Monomere in Form von in Wasser redispergierbaren Pulvern nach Anspruch 1 bis 6, **dadurch gekennzeichnet, dass** als Trocknungshilfsmittel zu ≥ 40 Gew.-%, bezogen auf das Gesamtgewicht der Trocknungshilfsmittel, die anorganischen Salze a) eingesetzt werden.

9. Schutzkolloid-stabilisierte Polymerisate auf Basis ethylenisch ungesättigter Monomere in Form von in Wasser redispergierbaren Pulvern erhältlich nach dem Verfahren von Anspruch 1 bis 8.

10. Schutzkolloid-stabilisierte Polymerisate auf Basis ethylenisch ungesättigter Monomere in Form von in Wasser redispergierbaren Pulvern erhältlich nach dem Verfahren von Anspruch 7.

11. Baustofftrockenformulierungen enthaltend ein oder mehrere hydraulisch abbindende Bindemittel, ein oder mehrere Füllstoffe, ein oder mehrere Schutzkolloid-stabilisierte Polymerisate auf Basis ethylenisch ungesättigter Monomere in Form von in Wasser redispergierbaren Pulvern aus Anspruch 9 oder 10 und gegebenenfalls ein oder mehrere Zusatzstoffe.

12. Verwendung der Baustofftrockenformulierungen aus Anspruch 11 zur Herstellung von Armierungsmassen für Wärmedämmverbundsysteme oder zur Herstellung von Klebemitteln oder Beschichtungsmitteln.

## Claims

1. A process for producing protective-colloid-stabilized polymers based on ethylenically unsaturated monomers in the form of water-redispersible powders,
by producing aqueous dispersions of protective-colloid-stabilized polymers based on ethylenically unsaturated monomers by polymerization of one or more ethylenically unsaturated monomers in an aqueous medium and drying said dispersions in the presence of one or more drying aids, **characterized in that**
the drying aids include a) one or more inorganic salts selected from the group of alkali metal sulfates and alkali metal sulfites and b) optionally one or more water-soluble organic polymers and
the inorganic salts a) are present in the aqueous dispersions of the protective-colloid-stabilized polymers based on ethylenically unsaturated monomers in dissolved form after all drying aids have been added,
wherein the inorganic salts a) are employed as drying aids to an extent of ≥ 25% by weight based on the total weight of the drying aids, and wherein the proportion of any water-soluble organic polymers b) employed as drying aids is ≤ 40% by weight based on the total weight of protective colloids and any water-soluble organic polymers b) employed as drying aids,
with the proviso that the protective colloids are added before or during the polymerization, and
that any water-soluble organic polymers b) employed as drying aids are added to the aqueous dispersions of the protective-colloid-stabilized polymers after production of said aqueous dispersions by polymerization, and
that the protective colloids stabilize the polymerization batch during the polymerization in an aqueous medium and also the polymer particles formed in the course of the polymerization and that the protective colloids are incorporated into the polymer particles formed in the course of the polymerization, and
that any water-soluble organic polymers b) employed as drying aids, as a result of their addition after the polymerization, encase the polymer particles formed in the course of the polymerization.

2. The process for producing protective-colloid-stabilized polymers based on ethylenically unsaturated monomers in the form of water-redispersible powders as claimed in claim 1, **characterized in that** 0.1% to 20% by weight of inorganic salts a) are used, based on the total weight of the polymers based on ethylenically unsaturated monomers.

3. The process for producing protective-colloid-stabilized polymers based on ethylenically unsaturated monomers in the form of water-redispersible powders as claimed in claim 1 or 2, **characterized in that** 2% to 50% by weight of inorganic salts a) are used, based on the total weight of the protective colloids.

4. The process for producing protective-colloid-stabilized polymers based on ethylenically unsaturated monomers in the form of water-redispersible powders as claimed in claims 1 to 3, **characterized in that** 2% to 50% by weight of inorganic salts a) are used, based on the total weight of the protective colloids and the water-soluble organic polymers b).

5. The process for producing protective-colloid-stabilized polymers based on ethylenically unsaturated monomers in the form of water-redispersible powders as claimed in claims 1 to 4, **characterized in that** sodium sulfate, sodium sulfite, potassium sulfate and/or potassium sulfite are used as inorganic salts a).

6. The process for producing protective-colloid-stabilized polymers based on ethylenically unsaturated monomers in the form of water-redispersible powders as claimed in claims 1 to 5, **characterized in that** one or more water-soluble organic polymers b) are selected from the group comprising polyvinyl alcohols, polyvinyl acetals, nonionic polyvinylpyrrolidones, nonionic poly(meth)acrylamides, polysaccharides, and proteins.

7. The process for producing protective-colloid-stabilized polymers based on ethylenically unsaturated monomers in the form of water-redispersible powders as claimed in claims 1 to 6, **characterized in that** exclusively inorganic salts a) are employed as drying aids.

8. The process for producing protective-colloid-stabilized polymers based on ethylenically unsaturated monomers in the form of water-redispersible powders as claimed in claims 1 to 6, **characterized in that** the inorganic salts a) are employed as drying aids to an extent of ≥ 40% by weight based on the total weight of the drying aids.

9. A protective-colloid-stabilized polymer based on ethylenically unsaturated monomers in the form of water-redispersible powders obtainable by the process as claimed in claims 1 to 8.

10. A protective-colloid-stabilized polymer based on ethylenically unsaturated monomers in the form of water-redispersible powders obtainable by the process as claimed in claim 7.

11. A building material dry formulation comprising one or more hydraulically setting binders, one or more fillers, one or more protective-colloid-stabilized polymers based on ethylenically unsaturated monomers in the form of water-redispersible powders from claim 9 or 10, and optionally one or more additives.

12. The use of the building material dry formulation from claim 11 for the production of reinforcing compounds for thermal insulation composite systems or for the production of adhesives or coating materials.

## Revendications

1. Procédé de préparation de polymères à base de monomères éthyléniquement insaturés, stabilisés par des colloïdes de protection, sous forme de poudres redispersibles dans l'eau,
dans lequel des dispersions aqueuses de polymères à base de monomères éthyléniquement insaturés, stabilisés par des colloïdes de protection, sont préparées par polymérisation d'un ou de plusieurs monomères éthyléniquement insaturés dans un milieu aqueux et séchées en présence d'un ou de plusieurs adjuvants de séchage, **caractérisé en ce que**
les adjuvants de séchage comprennent a) un ou plusieurs sels inorganiques choisis dans le groupe des sulfates alcalins et des sulfites alcalins et b) le cas échéant un ou plusieurs polymères organiques solubles dans l'eau et
les sels inorganiques a) se trouvent sous forme dissoute dans les dispersions aqueuses des polymères à base de monomères éthyléniquement insaturés, stabilisés par des colloïdes de protection, après ajout de l'ensemble des adjuvants de séchage,
les sels inorganiques a) étant utilisés, à raison de ≥ 25% en poids, par rapport au poids total des adjuvants de séchage, comme adjuvants de séchage et
la proportion d'éventuels polymères organiques b) solubles dans l'eau utilisés comme adjuvants de séchage représentant ≤ 40% en poids, par rapport au poids total de colloïdes de protection et d'éventuels polymères organiques b) solubles dans l'eau utilisés comme adjuvants de séchage,
sous réserve que les colloïdes de protection soient ajoutés avant ou pendant la polymérisation et
d'éventuels polymères organiques b) solubles dans l'eau utilisés comme adjuvants de séchage étant ajoutés aux dispersions aqueuses des polymères stabilisés par des colloïdes de protection après leur préparation par polymérisation et
les colloïdes de protection stabilisant la charge de polymérisation pendant la polymérisation en milieu aqueux et également les particules polymères formées au cours de la polymérisation et les colloïdes de protection étant incorporés dans les particules polymères formées au cours de la polymérisation et
les polymères organiques b) solubles dans l'eau utilisés comme adjuvants de séchage enveloppant les particules polymères formées au cours de la polymérisation suite à leur ajout après la polymérisation.

2. Procédé de préparation de polymères à base de monomères éthyléniquement insaturés, stabilisés par des colloïdes de protection, sous forme de poudres redispersibles dans l'eau selon la revendication 1, **caractérisé en ce qu'**on utilise 0,1 à 20% en poids de sels inorganiques a), par rapport au poids total des polymères à base de monomères éthyléniquement insaturés.

3. Procédé de préparation de polymères à base de monomères éthyléniquement insaturés, stabilisés par des colloïdes de protection, sous forme de poudres redispersibles dans l'eau selon la revendication 1 ou 2, **caractérisé en ce qu'**on utilise 2 à 50% en poids de sels inorganiques a), par rapport au poids total des colloïdes de protection.

4. Procédé de préparation de polymères à base de monomères éthyléniquement insaturés, stabilisés par des colloïdes de protection, sous forme de poudres redispersibles dans l'eau selon la revendication 1 à 3, **caractérisé en ce qu'**on utilise 2 à 50% en poids de sels inorganiques a), par rapport au poids total des colloïdes de protection et des polymères organiques b) solubles dans l'eau.

5. Procédé de préparation de polymères à base de monomères éthyléniquement insaturés, stabilisés par des colloïdes de protection, sous forme de poudres redispersibles dans l'eau selon la revendication 1 à 4, **caractérisé en ce qu'**on utilise, comme sels inorganiques a), du sulfate de sodium, du sulfite de sodium, du sulfate de potassium et/ou du sulfite de potassium.

6. Procédé de préparation de polymères à base de monomères éthyléniquement insaturés, stabilisés par des colloïdes de protection, sous forme de poudres redispersibles dans l'eau selon la revendication 1 à 5, **caractérisé en ce qu'**un ou plusieurs polymères organiques b) solubles dans l'eau sont choisis dans le groupe comprenant les poly(alcools vinyliques), les polyvinylacétals, les polyvinylpyrrolidones non ioniques, les poly(méth)acrylamides non ioniques, les polysaccharides et les protéines.

7. Procédé de préparation de polymères à base de monomères éthyléniquement insaturés, stabilisés par des colloïdes de protection, sous forme de poudres redispersibles dans l'eau selon la revendication 1 à 6, **caractérisé en ce qu'**on utilise, comme adjuvants de séchage, exclusivement des sels inorganiques a).

8. Procédé de préparation de polymères à base de monomères éthyléniquement insaturés, stabilisés par des colloïdes de protection, sous forme de poudres redispersibles dans l'eau selon la revendication 1 à 6, **caractérisé en ce qu'**on utilise, comme adjuvants de séchage, à raison de ≥ 40% en poids, par rapport au poids total des adjuvants de séchage, les sels inorganiques a).

9. Polymères à base de monomères éthyléniquement insaturés, stabilisés par des colloïdes de protection, sous forme de poudres redispersibles dans l'eau, pouvant être obtenus selon le procédé selon la revendication 1 à 8.

10. Polymères à base de monomères éthyléniquement insaturés, stabilisés par des colloïdes de protection, sous forme de poudres redispersibles dans l'eau, pouvant être obtenus selon le procédé selon la revendication 7.

11. Formulations sèches de matériau de construction contenant un ou plusieurs liants à prise hydraulique, une ou plusieurs charges, un ou plusieurs polymères à base de monomère éthyléniquement insaturés, stabilisés par des colloïdes de protection, sous forme de poudres redispersibles dans l'eau de la revendication 9 ou 10 et le cas échéant un ou de plusieurs additifs.

12. Utilisation des formulations sèches de matériau de construction de la revendication 11 pour la préparation de masses d'armature pour des systèmes composites d'isolation thermique ou pour la préparation d'adhésifs ou d'agents de revêtement.
